# EUROPEAN PATENT SPECIFICATION

(11) **EP 2 802 179 B1**
(45) Date of publication and mention of the grant of the patent: **08.03.2017**
(21) Application number: 13166895.6
(22) Date of filing: 07.05.2013
(51) Int. Cl.: H04W 72/04, H04W 76/02, H04W 84/18

(54) **Concurrent activation and data exchange with multiple NFC-A devices**
Gleichzeitige Aktivierung und Datenaustausch mit mehreren NFC-A-Vorrichtungen
Activation simultanée et échange de données avec de multiples dispositifs NFC-A

(43) Date of publication of application: 12.11.2014
(73) Proprietor: OCT Circuit Technologies International Limited, Dublin 18 (IE)
(72) Inventor: Hussain, Jafer, 669597 Singapore (SG); Rangarajan, Anand, 821161 Singapore (SG); Ravindran, Rajkrishna Pillai, 760621 Singapore (SG)
(74) Representative: Grünecker Patent- und Rechtsanwälte PartG mbB

(56) References cited:
- WO-A2-2010/011055
- US-A1- 2007 263 596
- US-A1- 2013 052 950

## Description

This invention is relates to Near Field Communications (NFC), and in particular, but without limitation, to a new implementation of the NFC Controller Interface (NCI) to permit communication with multiple NFC devices simultaneously. The invention also suitably relates to NFC-supported devices, such as NFC-enabled mobile phones, tablets, and various consumer electronic devices.

NFC Forum has standardized the communication interface between a device's main processor and an NFC controller, which standard has been published in the form of a technical specification known as the NCI specification. The NCI specification defines a common level of functionality and interoperability among the components within NFC-enabled devices to facilitate new and varied NFC implementations between different System On Chip (SOC), NFC and other OEM component manufacturers.

Specifically, the NCI specification eases NFC controller chip sourcing for device manufacturers and allows them to integrate NFC controller chipsets from different chip manufacturers. Device manufacturers can use the NCI specification for various kinds of NFC-enabled devices and thus bring them more easily and quickly to rapidly-changing technology markets.

In addition, US Patent Application No: US2007/263596 A1 (Charrat Bruno) 15 November 2007, discloses a method for routing data in a chipset comprising at least two host processors and one RFID-type contactless data send/receive interface configurable according to several operating modes and according to several contactless communication protocols.

The NCI specification defines the parameters that enable a device's main processor (CPU) to interact, and communicate, with an NFC controller thus enabling the CPU to control the RF communication with one or more remote NFC devices. For example, NCI enables a CPU to configure an NFC controller as an NFC Reader/Writer, an NFC tag (i.e. card emulation), and/or NFC Peer-to-Peer (P2P) device (i.e. Initiator & Target).

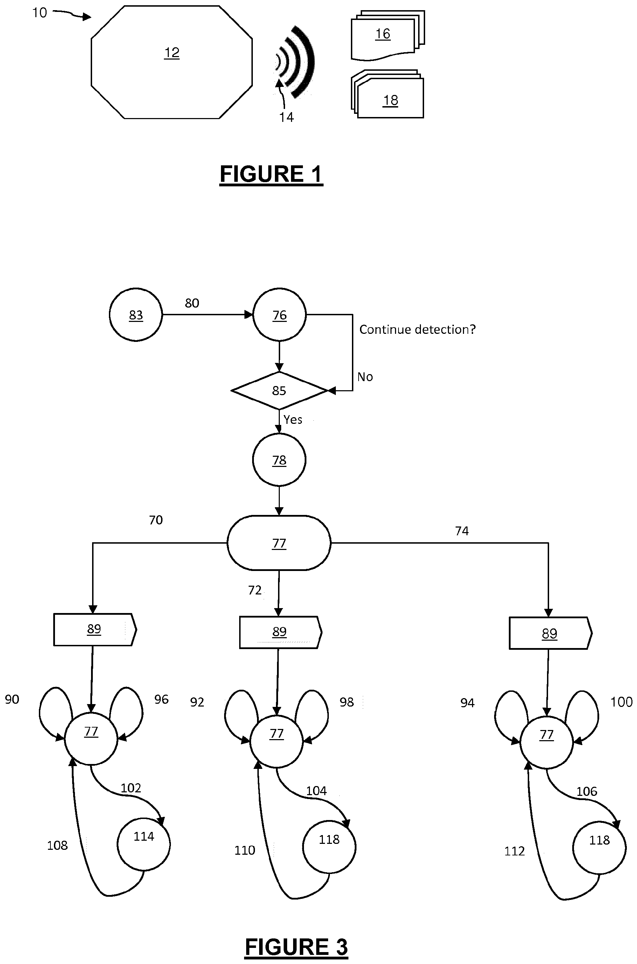

This invention is suitably applicable to all of aforementioned modes of NFC-A or type-A technology based NFC devices, such as those shown schematically in in Figure 1 of the drawings. Additionally or alternatively, the invention is suitably applicable to an NFC-A Reader/Writer or an NFC-A P2P Initiator device (i.e. NFC-A device in Poll Mode), any of which can support ISO-DEP, or NFC-DEP or both ISO-DEP and NFC-DEP (dual protocol) as data exchange protocols at 106kbps bit-rate.

Although the NFC Forum Digital Protocol Specification (which refers to ISO14443-4) supports the activation of multiple NFC-A listen mode devices over the RF protocol (for which see Annex A of ISO14443-4), the NCI specification doesn't offer any mechanism between a device's CPU and the NFC controller to enable concurrent activation and data exchange with multiple NFC-A listen mode devices. The reason for this is that the current NCI specification allocates a single, static channel to the active NFC listen mode device, which means that the host device can only interact with one NCF listen mode device at a time. Thus, when more than one NFC device is detected, communications between the initiator and each target must be performed sequentially, which gives rise to a number of problems:
Firstly, it is not possible to transfer data from one NFC-A listen mode to another directly. To achieve this, it is necessary to transfer the read data from one NFC device and to store it in the initiator's memory. The connection between the initiator and the first NFC device then needs to be terminated, before a second connection to a second detected target NFC device can be initiated. Once the second NFC connection has been established, the data transfer from the initiator's memory to the second NFC device can be initiated. Once the data has been transferred, the NFC connections can be terminated. This methodology limits the amount of data that can be transferred to the available memory of the initiator device, and adding additional memory to support this functionality is undesirable and relatively expensive. In addition, this known methodology is slow because each data transfer cycle involves two initiation, transmission and terminating steps: one set to each of the NFC devices, which process may in any event need to be repeated one or more times if the amount of data that needs to be transferred exceeds the available memory of the initiator device.

Furthermore, where any of the detected NFC devices supports dual protocol, this process will need to be repeated because existing NFC implementations are restricted to supporting the activation of only one NFC-A listen mode device at a time.

A need therefore exists for a method, apparatus and/or system that supports data exchange between multiple detected NFC devices simultaneously, whilst which at the same time, does not violate the interoperability requirements of NCI. These competing requirements do not, at present, support concurrent activation and data exchange with multiple NFC-A listen mode devices, for example, when attempting to copy data from one NFC-A listen mode device to another NFC-A listen mode device via an NFC-A device in Poll Mode.

Existing systems that can achieve this require a large amount of memory in the NFC-A device in Poll Mode, hence they are not generally cost-effective. Also, existing configurations are energy-inefficient because they call for sequentially powering-up and powering-down of the detected NFC devices one at a time. The serial nature of this addressing methodology is energy-inefficient, which is problematic where, say, the initiator or device in poll mode is battery-powered.

The invention aims to address one or more of the above problems. Suitably, the invention aims to provide an improved and/or alternative NFC data transfer methodology, which is suitably manifested in NFC-enabled hardware, such as an NFC-enabled device operable in poll mode.

Various aspects of the invention are set forth in the appendent claims.

The invention thus differs from the prior art by providing a plurality of dynamic channels, one to each detected listen mode device, or one to each protocol of each detected listen node device, rather than by sequentially (serially) connecting to each detected listen mode device on a single, static channel.

Suitably, the invention additionally comprises: in each logical channel, establishing and maintaining a connection between the first NFC-enabled device and each of the second NFC-enabled devices. This may enable a connection to be established and maintained with a number of listen mode devices simultaneously.

In order to keep track of which listen mode devices are allocated to each of the dynamic channels of the NCI, the method may additionally comprise monitoring and/or recording of the instantaneous connection status of each of the second NFC-enabled devices, which may permit connection and/or disconnection of individual, or groups of, second NFC-enabled devices as they come into and/or out of range of the first NFC-enabled device.

This is accomplished by the step of monitoring and/or recording the instantaneous connection status using a device-specific RF state machine Finite State Machine (FSM) for each identified second NFC-enabled device present in the RF field. The RF state machine FSM suitably tracks which NFC listen mode devices are connected to the NFC interface using whichever protocols are applicable to each pair of devices (i.e. each pair of connected poll mode and listen mode devices). This facilitates interoperability between poll mode and listen mode devices operating using different RF connection protocols.

Additionally, the invention keeps track of the dynamic channels allocated to each of the NFC listen mode devices in the NCI. This is accomplished by maintaining a device-specific NCI state machine FSM for each identified second NFC-enabled device present in the RF field. The NCI state machine FSM suitably has two NCI poll mode states. The NCI state machine thereby enables different NFC listen mode devices to be connected to, and disconnected from, dynamically, for example, as they enter and leave the RF field.

As such, the method enables the main processor of the poll mode device to address each detected listen mode device individually, or in groups. This is accomplished, in one embodiment, by querying the NCI finite state machine to establish which dynamic channel maps to which device, followed by interrogating the RF finite state machine to establish which RF protocol is being used by each target listen mode device. Then, the main processor, or the poll mode device, can map specific data bursts to specific devices by routing the data on the dynamic channels, via the appropriate RF protocols, to transmit and/or receive data from individual, or groups of target listen mode devices. At the same time, the connections to each of the listen mode devices are kept "open" meaning that data can be transferred from the poll mode device to any of the listen mode devices without first having to go through the sequential series of disconnection/connection routines that would be necessary using the existing, single, static channel of the NCI.

In an alternative mode of operation, that is to say, when one wishes to transfer data from one listen mode device to another, without invoking the poll mode device, this too is possible using the invention. In this case, the NFC interface acts as a data bus for routing data between the detected, in-range, listen mode devices. This can be accomplished by interrogating the NCI FSM and the RF FSM to determine which dynamic NCI channels have been allocated to each of the active listen mode devices, and via which RF protocols they are connected. The NFC controller can then act to route data transmissions directly to and from one listen mode device to another without necessarily having to involve the main processor of the poll mode device at all. By deploying the invention such that the NFC controller can act as a parallel data bus interposed between the main processor of the poll mode device and each of the listen mode devices, it is possible, in an embodiment of the invention, to route data in various ways simultaneously by using the different dynamic channels allocated to each of the listen mode devices. According to a second aspect of the invention, there is provided a first NFC-enabled device in poll mode comprising an NFC interface, the NFC interface being characterised by a comprising a plurality of logical channels, each logical channel being individually assignable, in use, to a separate second NFC-enabled device in listening mode detected within the RF field of the NFC-enabled device.

The NFC interface suitably comprises means for establishing and maintaining a connection with each of the detected second NFC-enabled devices on a separate one of the logical channels.

The NFC interface may additionally comprise means for monitoring and/or recording the instantaneous connection status of each of the detected second NFC-enabled devices, which may permit connection and/or disconnection of individual, or groups of, second NFC-enabled devices as they come into and/or out of range of the first NFC-enabled device.

The means for monitoring and/or recording the instantaneous connection status of each of the detected second NFC-enabled devices suitably comprises a device-specific RF state machine Finite State Machine (FSM) for each identified second NFC-enabled device present in the RF field.

The means for monitoring and/or recording the instantaneous connection status of each of the detected second NFC-enabled devices suitably comprises a device-specific NCI state machine FSM for each identified second NFC-enabled device present in the RF field. The NCI state machine FSM suitably has two NCI poll mode states.

The first NFC-enabled device suitably comprises any one or more of the group comprising: an RF transceiver; memory; and a power supply.

Each logical channel is suitably a dynamic logical channel. Such a configuration may enable the data transfer priorities of each of the second NFC-enabled devices to be re-ordered dynamically, and/or for additional second NFC-enabled devices to be detected, and optionally connected to, dynamically, and/or for one or more of the second NFC-enabled devices to be disconnected dynamically.

According to the present invention, a method as set forth in claim 1 and a near field communication-enabled poll mode device as set forth in claim 9 are provided. Embodiments of the invention are claimed in the dependent claims.

A preferred embodiment of the invention shall now be described, by way of example only, with reference to the accompanying drawings in which:
Figure 1 is a schematic view of a known NFC system;
Figure 2 is a schematic flow diagram showing the operation of an exemplary embodiment of the invention;
Figure 3 is a schematic representation of the finite state machine of the invention;
Figure 4 is an exemplary embodiment of the NFC controller architecture showing the firmware modules present to accomplish the invention as described above; and
Figure 5 is a simplified schematic diagram showing the operation of an embodiment of the invention.

In Figure 1, an NFC system 10 comprises first NFC-enabled device 12 in poll mode, meaning that it can act as a read and/or write device, or as a peer-to-peer (P2P) initiator. The first NFC-enabled device 12 comprises an RF transceiver (not shown), which emits an FR field 14. A number of NFC-enabled devices 16, 18, in listening mode can be detected, and connected to, by the first NFC-enabled device 12, when the second NFC-enabled devices 16, 18 come in range, that is to say, they enter the RF field 14. The second NFC-enabled devices can be so-called smart tags 16, which are often powered by an induction loop that draws power from the RF field 14, or P2P target devices 18, which are most often self-powered, for example, by an on-board battery.

The first NFC-enabled device in poll mode is able to establish a wireless connection to individual ones of the tags 16 or P2P targets 18, and data and/or power can be transmitted between the devices via the RF field.

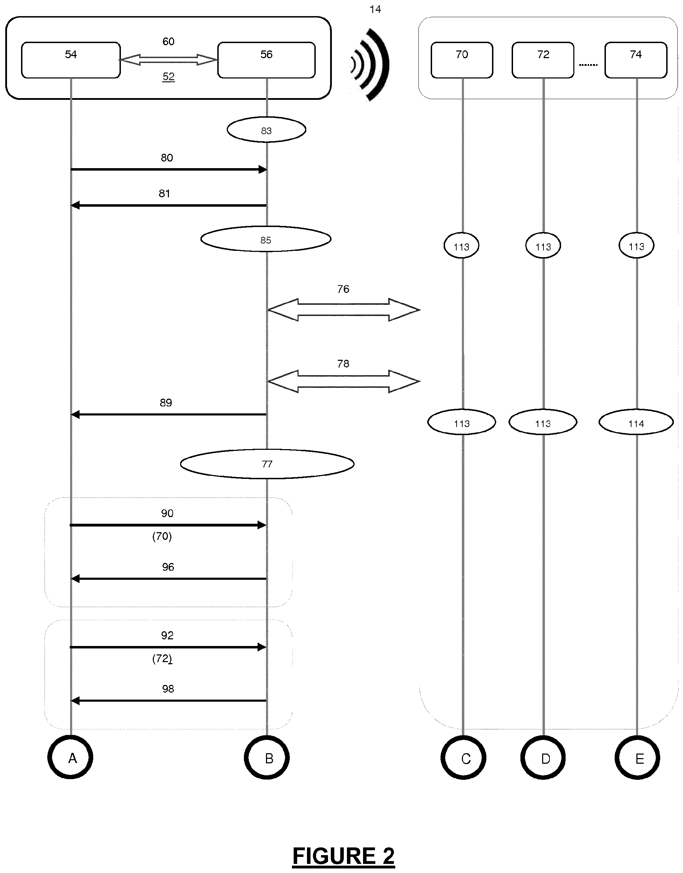

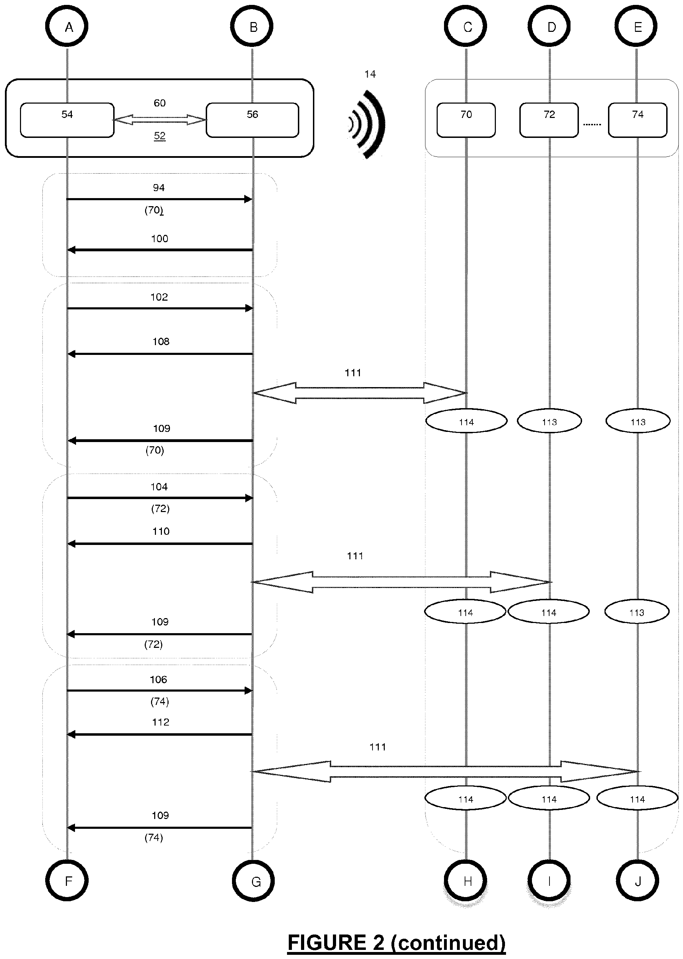

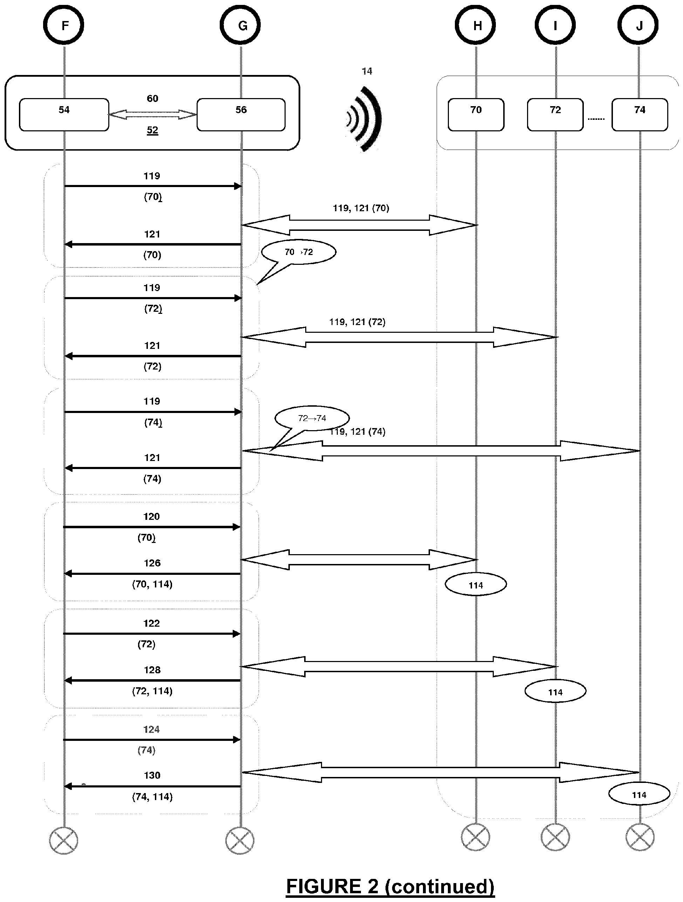

In Figures 2 and 3, an NFC system in accordance with the invention 50 is described schematically. The physical configuration of the set-up is substantially the same as that shown in Figure 1, except that the NFC-enabled device in poll mode 12 comprises an NFC interface having a plurality of logical channels, whereas in the known system of Figure 1, there is just one channel thus restricting communication with an individual one of the second NFC-enabled devices 16, 18 at any given time.

The first NFC-enabled device 52 comprises a main processor 54 and a NFC controller chip 56, which interfaces with the RF transceiver (not shown) to emit an RF field 58. An NFC interface (or "NCI") 60 is interposed between the CPU 54 and the NFC controller 56, and thus the first NFC-enabled device in in poll mode 52 is able detect the presence of multiple NFC-A listen mode devices 70, 72, 74 located within the RF field 58. Each second NFC-enabled device 70, 72, 74 is identified one at a time using known detection 76 and collision resolution 78 procedures respectively.

This is achieved 77, in one embodiment, by the first NFC-enabled device's main processor 54 initiating a detection routine by sending a "discover" command 80 to the NFC controller 56. The NFC controller 56 responds with a response signal 81. This wakes the NFC controller 56 from an idle 83 state to an active state 85.

The NFC controller 56 then proceeds to initiate a detection and collision-avoidance routine comprising sending a discovery signal 87 containing a unique RF discovery identifier for each identified NFC-A listen mode device 70, 72, 74. If any of the second NFC-enabled devices 70, 72, 74 supports dual protocol, then the NFC Controller 56 sends two discovery signals 89 to the device's main processor 54 - one for each protocol.

As shown in Figure 3, the NFC controller 56 maintains an individual state for each of the identified second NFC-enabled devices 70, 72, 74, all of which states are, at this time, set to "select" 80, 82, 84, thus enabling each protocol of the second NFC-enabled devices 70, 72, 74 in range to be addressed individually. This is confirmed, by each second NFC-enabled device 70, 72, 74, by an acknowledgement signal 109.

Once each protocol of each of the second NFC-enabled devices 70, 72, 74 have been identified, and are selectable, the first NFC-enabled device's 52 main processor 54 sends "create connection" command 90, 92, 94 to each protocol of each of the identified NFC-A listen mode devices 70, 72, 74. In response, the NFC controller of each of the second NFC-enabled devices 70, 72, 74 returns a response signal 96, 98, 100, containing a unique connection identifier.

The first NFC-enabled device's main processor 54 then sends an "RF discover select" command 102, 104, 106 for each second NFC-enabled device 70, 72, 74, which activates 111 each second NFC-enabled device 71, 72, 74 upon receipt of a response signal 108, 110, 112. At this point, the state machine 200 is updated to reflect the connection status for each second NFC-enabled device 70, 72, 74 from sleep 113 to "activated" 114, 116, 118.

The above steps can be repeated at intervals to enable any other second NFC-enabled devices to be detected, and connected to, upon entering the RF field 58.

Once a connection to each of the protocols of each of the second NFC-enabled devices 70, 72, 74 has been established (NFC state 114, 116, 118 is "activated"), the first NFC-enabled device's main processor 54 is able to exchange data (send 119 and receive 212) with the each of the activated second NFC-enabled listen mode devices 70, 72, 74.

The first NFC-enabled device's main processor 54 can terminate the connection with individual, or groups of, second activated NFC-enabled devices 70, 72, 74 by sending a "connection close" command 120, 122, 124, followed by receiving a response signal 126, 128, 130 with the corresponding connection ID. The NFC controller 56 then deactivates132 the associated NFC-A listen mode device 70, 72, 74, and then changes the state in the state machine for that NFC-A listen mode device back to "select" 113.

Alternatively, first NFC-enabled device's main processor 54 can terminate the connection with all the activated second NFC-enabled devices 70, 72, 74 by sending a "global deactivate" command to the NFC Controller. In this case, NFC Controller deactivates all of the activated second NFC-enabled devices 70, 72, 74, and then changes the state for those devices to "select" 113.

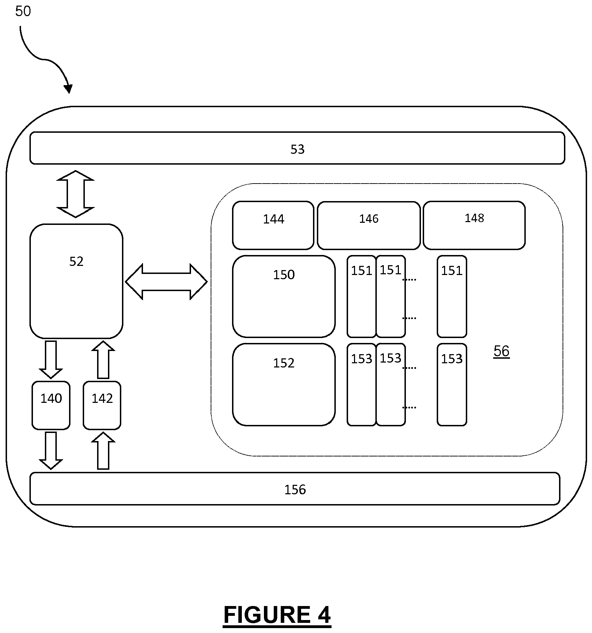

In Figure 4, it will be seen that the first NFC-enabled device 50 comprises a main processor 52 and an NFC controller 56, as previously described, plus a transceiver comprising an RF transmitter 140 and an RF receiver 142. The main processor 52 interfaces with the UART, SPI or I2C as a host interface 53. Within the NFC controller 56, there is a generic NFC interface front side module 144 coupled with NFC-A technology module 146 and an NFC-A collision resolution module 148. The NFC controller 56 is able to establish separate dynamic channels for each detected NFC-enabled listening device, by way of a device-specific NFC interface front side module 150, which allocates separate dynamic channels 151 for each detected NFC listening device. Within each dynamic channel 151, there may be one or two RF protocols 153, which are separately handled by a device specific RF protocol front side module 152. The whole process interfaces with an NFC MAC or PHY layer 156, enabling the flow of data packets from and to each of the first and second NFC-enabled devices to correctly routed without collisions.

It will be appreciated that the architecture of the invention, and/or its implementation enables the first NFC-enabled device in poll mode 50, based on the existing NCI specification, to establish concurrent activation and data exchange with multiple NFC-A Listen Mode devices 70, 72, 74 simultaneously. As such, the invention does not violate the NCI specification.

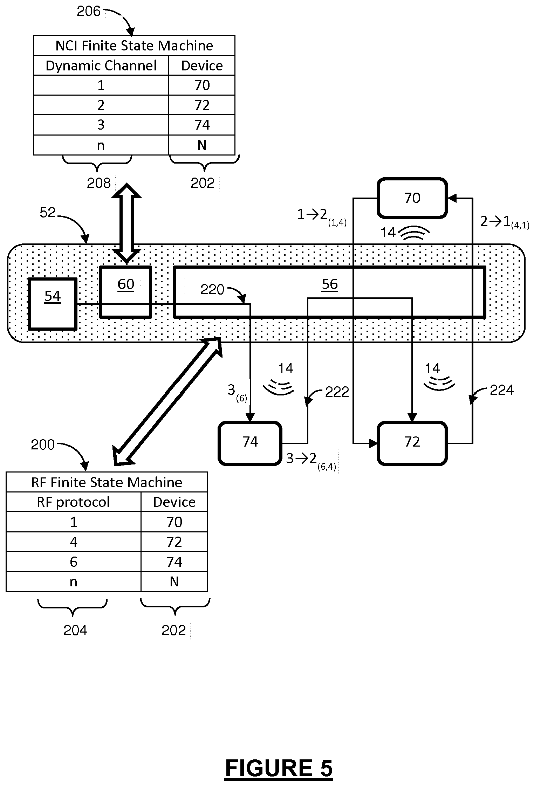

Figure 5 is represents a simplified embodiment of the invention in which a first NFC-enabled device in poll mode 52 comprises a main processor 54, an NCI interface 60 and an NFC controller 56. The poll mode device 52 communicates with a number of listen mode devices 70, 72, 74, via RF fields 14, as previously described.

The NFC controller 56 operates, and maintains, an RF finite state machine 200, which contains a table of which devices 202 are connected thereto via which RF protocols 204. As such, the NFC controller is able to correctly address each of the in-range listen mode devices using an appropriate RF protocol, which aids interoperability of listen mode devices from, say, different chip set manufacturers.

At the same time, the NCI operates, and maintains an NCI Finite State Machine index 206, which contains a table that maps each of the detected, in-range listen mode devices 202 to a separate, dynamic channel 208.

Both the RF finite state machine and the NCI finite state machine indexes 200, 206 are updated in real-time, or at intervals, and can be combined, into a single, combined finite state machine (FSMC), which advantageously avoids duplication of data.

When the poll mode device 52 wishes to communicate with one of the listen mode devices 74, as indicated in Figure 5, by arrow 220, the NCI finite state machine 206 is interrogated to determine which dynamic channel 208 has been allocated to that device 74, in this case, dynamic channel "3". The RF protocol for that device 74 is determined by interrogating the RF FSM 200, in this case, "6". A such, the main processor 54 can transmit data on dynamic channel "3", using RF protocol "6" (3₍₆₎) to map the transmission to the desired target listen mode device 74.

In addition, the main processor wishes to send the same data to devices 70 and 72 also. This can be accomplished in a similar manner (not shown), by transmitting the same data again on 1(1) and 2(4), respectively, as determined by the NCI FSM 206 and the RF FSM 200. This would involve a lot of main processor 54 operations, as well as consuming bandwidth in the NCI 60. The preferred solution is therefore to copy the data directly from device 74 to 72, and then from device 72 to device 70, as indicated by arrows 222 and 224, respectively. In these cases, the NFC controller 56 can act as a data bus by mapping the data transmission 220 to devices 72 and 74 using the FSMC mappings 3→2_{(6, 4)} and 2→1_{(4, 1)}, respectively. Thus, the NFC controller 56 is able to receive, from the main processor 54, a command to copy data to multiple devices, and to route the data to selected multiple devices simultaneously by making use of the multiple open connections and the dynamic channel mappings derived from the NCI FSM 206 and the RF FSM 200.

In addition, the NFC controller is able to act as a go-between, or data bus, for P2P communications between selected pairs, or groups of listen mode devices 70, 72, without involving the main processor at all, as is not possible using existing, single, static channel NFC methods. Such a situation is denoted, schematically, in Figure 5, by arrow 226, whereby the NFC controller acts as a data bus by mapping dynamic channel "1" to dynamic channel "2", using RF protocols "1" and "4", respectively (1→2_{(1,4)}).

Other modes of operation, combinations and permutations of data transfer between poll mode 52 and listen mode devices 70, 72, 74 can be envisaged once the use of dynamic channels in the NCI has been implemented.

Useful features and/or advantages that flow directly from the invention may include: lower power consumption of the first NFC-enabled device 50; a faster overall communication cycle; interoperability between various use-cases among NFC-A devices which require concurrent activation and data exchange with multiple NFC-A listen mode devices; a first NFC-enabled device 50 can query multiple second NFC-enabled devices 70, 72, 74 for AID (Application Identifier) and thus select the desired NFC-A listen mode device for data exchange; and potentially, a better user experience because the multiple second NFC-enabled 70, 72, 74 can be addressed, read from and written to in a similar manner to physical solid state drives or hard disks connected via USB or SATA connections. In other words, it is possible to connect to, inspect and transfer data directly between various NFC enabled devices, as if they were all USB-type memory devices connected directly to the first NFC-enabled device 50.

## Claims

1. A method of simultaneously connecting a first Near Field Communication-enabled device in poll mode (52) and a plurality of second Near Field Communication-enabled listen mode devices (70, 72, 74), the method comprising :
detecting the presence of the plurality of second Near Field Communication-enabled listen mode devices (70, 72, 74) and **characterized by** the first NFC-enabled device (52) sending an "RF discover select" command (102, 104, 106) for each second NFC-enabled device (70, 72, 74), which activates (111) each second NFC-enabled device (70, 72, 74) upon receipt of a response signal (108, 110, 112),
populating and maintaining a device-specific RF finite state machine (200) for each identified second listen mode device (70, 72, 74) to reflect the connection status for each second listen mode device (70, 72, 74) from sleep (113) to "activated" (114, 116, 118);
allocating to each of the detected second Near Field Communication-enabled listen mode devices (70, 72, 74), a separate dynamic logical channel (208) in a Near Field Communication Controller Interface (60) of the first Near Field Communication-enabled device (52);
populating and maintaining a device-specific Near Field Controller Communication Interface finite state machine (206) for each identified second listen mode device (70, 72, 74), which contains a table that maps each of the detected, in-range second listen mode devices (70, 72, 74) to a separate, dynamic logical channel (208),
wherein in each dynamic logical channel (208), establishing and maintaining a connection (220, 222, 224) between the first poll mode device (52) and each of the second listen mode devices (70, 72, 74) such that:
data can be transmitted and routed directly from one second listen mode device (74) to another second listen mode device (72) by mapping the data transmission (220) using the multiple open connections and the dynamic channel mappings contained in the Near Field Controller Communication Interface finite state machine (206) and the RF finite state machine (200).

2. A method as claimed in claim 1, additionally comprising monitoring and/or recording the instantaneous connection status of each of the detected second listen mode devices (70, 72, 74).

3. A method as claimed in claim 2, wherein the RF finite state machine (200) records which Near Field Communication listen mode devices (70, 72, 74) are connected to the Near Field Communication interface (60) using which RF protocols (204) are applicable to each pair of connected poll mode (52) and listen mode device (70, 72, 74).

4. A method as claimed in claim 3, wherein the Near Field Communication Controller Interface finite state machine (206) records which Near Field Communication listen mode devices (70, 72, 74) are allocated to which dynamic channels (208) of the Near Field Communication Controller Interface (60).

5. A method as claimed in any preceding claim, wherein the Near Field Communication Controller Interface finite state machine (206) allocates a plurality of dynamic channels (208) to each detected listen mode device (70, 72, 74).

6. A method of transmitting data between a first Near Field Communication poll mode device (52) and any one or more Near Field Communication listen mode devices (70, 72, 74) according to any preceding claim, comprising querying the Near Field Communication Controller Interface finite state machine (206) to determine which dynamic channel (208) maps to which listen mode device (202), interrogating the RF finite state machine (200) to determine which RF protocol (204) is in use by each target listen mode device (202), transmitting data (220) from the poll mode device (52) to a listen mode device (74) by routing the data via the determined dynamic channel (208) and using the determined RF protocol (202).

7. A method of transmitting data between an Near Field Communication listen mode device (74) and a Near Field Communication poll mode device (52) according to any preceding claim, comprising querying the Near Field Communication finite state machine (206) to determine which dynamic channel (208) maps to the said listen mode device (202), interrogating the RF finite state machine (200) to determine which RF protocol (204) is in use by the said listen mode device (202, 74), transmitting data (220) from the listen mode device (74) to the poll mode device (52) by routing the data via the determined dynamic channel (208) and using the determined RF protocol (204).

8. A method of transmitting data between first (74) and second (72) listen mode devices via the Near Field Communication controller (56) of a Near Field Communication poll mode device (52) acting as a data bus according to any preceding claim, comprising querying the Near Field Communication Controller Interface finite state machine (206) to determine which dynamic channel (208) maps to the said listen mode devices (202, 74, 72), interrogating the RF finite state machine (200) to determine which RF protocols (204) are in use by the said listen mode devices (202, 74, 72), transmitting data (222) from a first one of the listen mode devices (74) to a second one of the listen mode devices (72) by routing the data via the determined dynamic channels (208) and using the determined RF protocols (204).

9. A Near Field Communication-enabled poll mode device (52) comprising a Near Field Communication interface (56), the Near Field Communication interface (56) comprising:
a plurality of dynamic logical channels (208), each dynamic logical channel (208) being individually assignable, in use, to a separate second Near Field Communication-enabled listen mode device (70, 72, 74) detected within an RF field (14) of the Near Field Communication-enabled device in poll mode (52);
a device-specific RF finite state machine (200) for each identified second listen mode device which contains, for each identified second listen mode device (70, 72, 74), the connection status of each second NFC-enabled device (70, 72, 74) from sleep (113) to "activated" (114, 116, 118) obtained by the first NFC-enabled device (52) sending an "RF discover select" command (102, 104, 106) for each second NFC-enabled device (70, 72, 74), which activates (111) each second NFC-enabled device (70, 72, 74) upon receipt of a response signal (108, 110, 112);
and a device-specific Near Field Communication Controller Interface finite state machine (206) for each identified second listen mode device, which contains a table that maps each of the detected, in-range second Near Field Communication-enabled listen mode devices (70, 72, 74) to a separate, dynamic logical channel (208),
wherein in each dynamic logical channel, a connection (220, 222, 224) is established and maintained between the poll mode device (52) and each of the second listen mode devices (70, 72, 74),
the device (52) being configured to transmit and route data directly from one second Near Field Communication-enabled listen mode device (74) to another second Near Field Communication-enabled listen mode device (72) by mapping the data transmission (220) using the multiple open connections and the dynamic channel mappings contained in the Near Field Controller Communication Interface finite state machine (206) and the RF finite state machine (200).

10. The poll mode device (52) of claim 9, wherein the Near Field Communication Controller Interface finite state machine (206) comprises two Near Field Communication Controller Interface poll mode states (208).

11. The poll mode device (52) of claim 9 or claim 10, further comprising any one or more of the group comprising: an RF transceiver; memory; a power supply; and an RF induction loop antenna.

12. A read and/or write device (52) according to any of claims 9 to 11.

13. A peer-to-peer initiator (52) according to any of claims 9 to 12.

## Patentansprüche

1. Verfahren für das gleichzeitige Verbinden einer ersten near-field-communication-fähigen Vorrichtung (52) im Rundfragemodus und einer Vielzahl zweiter near-field-communication-fähigen Hörmodusvorrichtungen (70, 72, 74), wobei das Verfahren umfasst:
Erfassen der Gegenwart der Vielzahl von zweiten near-field-communication-fähigen Hörmodusvorrichtungen (70, 72, 74), **dadurch gekennzeichnet, dass** die erste NFC-fähige Vorrichtung (52) einen "HF-Entdeckungswähl"-Befehl (102, 104, 106) für jede zweite NFC-fähige Vorrichtung (70, 72, 74) sendet, der jede zweite NFC-fähige Vorrichtung (70, 72, 74) bei Empfang eines Antwortsignals (108, 110, 112) aktiviert (111),
Bestücken und Warten einer vorrichtungsspezifischen HF-finiten Statusmaschine (200) für jede identifizierte zweite Hörmodusvorrichtung (70, 72, 74), um den Verbindungsstatus für jede zweite Hörmodusvorrichtung (70, 72, 74) aus dem "Ruhezustand" (113) zu "aktiviert" (114, 116, 118) widerzuspiegeln;
Zuteilen zu jeder der erfassten zweiten near-field-communication-fähigen Hörmodusvorrichtung (70, 72, 74) eines dynamischen logischen Kanals (208) in einer Near-Field-Communication-Controller-Interface (60) der ersten near-field-communication-fähigen Vorrichtung (52);
Bestücken und Warten einer vorrichtungsspezifischen Near-Field-Controller-Communication-Interface-Finitestatus-Maschine (206) für jede identifizierte zweite Hörmodusvorrichtung (70, 72, 74), die eine Tabelle umfasst, die jede der erfassten, im Bereich befindlichen, zweiten Hörmodusvorrichtungen (70, 72, 74) auf einen separaten, dynamischen logischen Kanal (208) abbildet,
wobei in jedem dynamischen logischen Kanal (208) eine Verbindung (220, 222, 224) zwischen der ersten Rundfragemodusvorrichtung (52) und jeder der zweiten Hörmodusvorrichtungen (70, 72, 74) eingerichtet und beibehalten wird, so dass:
Daten direkt von einer zweiten Hörmodusvorrichtung (74) zu einer weiteren zweiten Hörmodusvorrichtung (72) durch Abbilden der Datensendung (220) unter Verwendung der zahlreichen offenen Verbindungen und der dynamischen Kanalabbildungen gesendet und geleitet werden können, die in der Near-Field-Controller-Communication-Interface-Finitestatus-Maschine (206) und der HF-Finitestatus-Maschine (200) enthalten sind.

2. Verfahren nach Anspruch 1, weiterhin umfassend das Überwachen und/oder Aufzeichnen des augenblicklichen Verbindungsstatus' jeder der erfassten zweiten Hörmodusvorrichtungen (70, 72, 74).

3. Verfahren nach Anspruch 2, bei dem die HF-Finitestatus-Maschine (200), welche Near-Field-Communication-Hörmodusvorrichtungen (70, 72, 74) mit der Near-Field-Communication-Interface (60) verbunden sind, mit Hilfe davon aufzeichnet, welche HF-Protokolle (204) auf jedes Paar von angeschlossener Rundfragemodus- (52) und Hörmodus- (70, 72, 74) Vorrichtung anwendbar sind.

4. Verfahren nach Anspruch 3, bei dem die Near-Field-Communication-Controller-Interface-Finitestatus-Maschine (206) aufzeichnet, welche Near-Field-Communication-Hörmodusvorrichtungen (70, 72, 74) welchen dynamischen Kanälen (208) der Near-Field-Communication-Controller-Interface (60) zugeordnet sind.

5. Verfahren nach einem der vorhergehenden Ansprüche, bei dem die Near-Field-Communication-Controller-Interface-Finitestatus-Maschine (206) eine Vielzahl dynamischer Kanäle (208) jeder erfassten Hörmodusvorrichtung (70, 72, 74) zuweist.

6. Verfahren für das Senden von Daten zwischen einer ersten Near-Field-Communication-Rundfragemodusvorrichtung (52) und einer beliebigen oder mehreren Near-Field-Communication-Hörmodusvorrichtungen (70, 72, 74) nach einem der vorhergehenden Ansprüche, umfassend das Abfragen der Near-Field-Controller-Communication-Interface-Finitestatus-Maschine (206) um zu bestimmen, welcher dynamische Kanal (208) auf welche Hörmodusvorrichtung (202) abbildet, Abfragen der HF-Finitestatus-Maschine (200) um zu bestimmen, welches HF-Protokoll (204) in jeder Ziel-Hörmodusvorrichtung (202) verwendet wird, Senden von Daten (220) von der Rundfragemodusvorrichtung (52) zu einer Hörmodusvorrichtung (74) durch Leiten der Daten über den bestimmten dynamischen Kanal (208) und unter Verwendung des bestimmten HF-Protokolls (202).

7. Verfahren für das Senden von Daten zwischen einer Near-Field-Communication-Hörmodusvorrichtung (74) und einer Near-Field-Communication-Rundfragemodusvorrichtung (52) nach einem der vorhergehenden Ansprüche, umfassend das Abfragen der Near-Field-Communication-Finitestatus-Maschine (206) um zu bestimmen, welcher dynamische Kanal (208) auf die Hörmodusvorrichtung (202) abstimmt, Befragen der HF-Finitestatus-Maschine (200) um zu bestimmen, welches HF-Protokoll (204) durch die Hörmodusvorrichtung (202, 74) in Verwendung ist, Senden von Daten (220) von der Hörmodusvorrichtung (74) zu der Rundfragemodusvorrichtung (52) durch Leiten der Daten über den bestimmten dynamischen Kanal (208) und Verwenden des bestimmten HF-Protokolls (204).

8. Verfahren für das Senden von Daten zwischen einer ersten (74) und einer zweiten (72) Hörmodusvorrichtung über die Near-Field-Communication-Steuereinheit (56) einer Near-Field-Communication-Rundfragemodusvorrichtung (52), die sich wie ein Datenbus verhält, nach einem der vorhergehenden Ansprüche, umfassend das Abfragen der Near-Field-Communication-Controller-Interface-Finitestatus-Maschine (206) um zu bestimmen, welcher dynamische Kanal (208) auf die Hörmodusvorrichtungen (202, 74, 72) abbildet, Befragen der HF-Finitestatus-Maschine (200) um zu bestimmen, welche HF-Protokolle (204) durch die Hörmodusvorrichtungen (202, 74, 72) in Verwendung sind, Senden von Daten (222) von einer ersten der Hörmodusvorrichtungen (74) zu einer zweiten der Hörmodusvorrichtungen (72) durch Leiten der Daten über die bestimmten dynamischen Kanäle (208) und unter Verwendung der bestimmten HF-Protokolle (204).

9. Near-field-communication-fähige Rundfragemodusvorrichtung (52), umfassend eine Near-Field-Communication-Schnittstelle (56), wobei die Near-Field-Communication-Schnittstelle (56) umfasst:
eine Vielzahl dynamischer logischer Kanäle (208), wobei jeder dynamische logische Kanal (208) in Verwendung individuell einer separaten zweiten near-field-communication-fähigen Hörmodusvorrichtung (70, 72, 74) zugewiesen werden kann, die innerhalb eines HF-Feldes (14) der near-field-communication-fähigen Vorrichtung im Rundfragemodus (52) erfasst wird;
eine vorrichtungsspezifische HF-Finitestatus-Maschine (200) für jede identifizierte zweite Hörmodusvorrichtung, die für jede identifizierte zweite Hörmodusvorrichtung (70, 72, 74) den Verbindungsstatus jeder zweiten NFC-fähigen Vorrichtung (70, 72, 74) von Ruhezustand (113) bis "aktiviert" (114, 116, 118) umfasst, den man durch die erste NFC-fähige Vorrichtung (52) erhält, die einen "HF-Entdeckungswähl"-Befehl (102, 104, 106) für jede zweite NFC-fähige Vorrichtung (70, 72, 74) sendet, der jede zweite NFC-fähige Vorrichtung (70, 72, 74) bei Empfang eines Antwortsignals (108, 110, 112) aktiviert;
und eine vorrichtungsspezifische Near-Field-Communication-Controller-Interface-Finitestatus-Maschine (206) für jede identifizierte zweite Hörmodusvorrichtung, die eine Tabelle umfasst, die jede der erfassten, im Bereich befindlichen, zweiten near-field-communication-fähigen Hörmodusvorrichtungen (70, 72, 74) auf einen separaten, dynamischen logischen Kanal (208) abbildet,
wobei in jedem dynamischen logischen Kanal (208) eine Verbindung (220, 222, 224) zwischen der Rundfragemodusvorrichtung (52) und jeder der zweiten Hörmodusvorrichtungen (70, 72, 74) eingerichtet und beibehalten wird,
wobei die Vorrichtung (52) dazu eingerichtet ist, Daten direkt von einer zweiten near-field-communication-fähigen Hörmodusvorrichtung (74) zu einer weiteren zweiten near-field-communication-fähigen Hörmodusvorrichtung (72) durch Abbilden der Datensendung (220) unter Verwendung der zahlreichen offenen Verbindungen und der dynamischen Kanalabbildungen zu senden und zu leiten, die in der Near-Field-Controller-Communication-Interface-Finitestatus-Maschine (206) und der HF-Finitestatus-Maschine (200) enthalten sind.

10. Rundfragemodusvorrichtung (52) nach Anspruch 9, bei der die Near-Field-Communication-Controller-Interface-Finitestatus-Maschine (206) zwei Near-Field-Communication-Controller-Interface-Rundfragemoduszustände (208) umfasst.

11. Rundfragemodusvorrichtung (52) nach Anspruch 9 oder 10, weiterhin umfassend wenigstens ein Element aus der Gruppe, die umfasst: einen HF-Sendeempfänger; einen Speicher; eine Stromversorgung und eine HF-Induktions-Rahmenantenne.

12. Lese- und/oder Schreibvorrichtung (52) nach einem der Ansprüche 9 bis 11.

13. Peer-To-Peer-Initiator (52) nach einem der Ansprüche 9 bis 12.

## Revendications

1. Procédé de connexion simultanée d'un premier dispositif (52) activé par communication en champ proche en mode d'interrogation et d'une pluralité de seconds dispositifs (70, 72, 74) activés par communication en champ proche en mode écoute, le procédé comprenant :
la détection de la pluralité de seconds dispositifs (70, 72, 74) activés par communication en champ proche en mode écoute, **caractérisée par** l'envoi, par le premier dispositif (52) activé par communication NFC (en champ proche) en mode d'interrogation, d'un ordre « RF discover select » (« sélectionner recherche RF ») (102, 104, 106) pour chaque second dispositif (70, 72, 74) activé par communication NFC qui active (111) chaque second dispositif (70, 72, 74) activé par communication NFC à la réception d'un signal de réponse (108, 110, 112) peuplant et maintenant une machine RF à états finis (200) spécifique au dispositif pour chaque second dispositif (7.0, 72, 74) en mode écoute identifié pour qu'elle reflète l'état de connexion de chaque second dispositif (70, 72, 74) en mode écoute depuis l'état sommeil (113) jusqu'à l'état « activé » (114, 116, 118),
l'allocation faite à chacun des seconds dispositifs (70, 72, 74) activés par communication en champ proche détectés d'un canal logique dynamique séparé (208) dans une interface de contrôleur de communication en champ proche (60) du premier dispositif (52) activé par communication en champ proche,
le peuplement et le maintien d'une machine à états finis d'interface de communication de contrôleur en champ proche (206) spécifique à un dispositif pour chaque second dispositif (70, 72, 74) en mode écoute identifié qui contient une table qui mappe chacun des seconds dispositifs (70, 72, 74) en mode écoute détectés, dans la plage, à un canal logique dynamique (208) séparé,
dans lequel, dans chaque canal logique dynamique (208), l'établissement et le maintien d'une connexion (220, 222, 224) entre le premier dispositif (52) en mode d'interrogation et chacun des seconds dispositifs (70, 72, 74) en mode écoute sont tels que :
des données peuvent être transmises et acheminées directement depuis un, premier, second dispositif (74) en mode écoute à un autre second dispositif (72) en mode écoute en mappant la transmission de données (220) en utilisant de multiples connexions ouvertes et les mappages de canaux dynamiques contenus dans la machine à états finis (206) d'interface de communication de contrôleur en champ proche et dans la machine RF à états finis (200).

2. Procédé selon la revendication 1, comprenant en outre la surveillance et/ou l'enregistrement de l'état instantané de connexion de chacun des seconds dispositifs (70, 72, 74) en mode écoute détectés.

3. Procédé selon la revendication 2, dans lequel la machine RF à états finis (200) enregistre quels dispositifs (70, 72, 74) activés par communication en champ proche en mode écoute sont connectés à l'interface de communication en champ proche (60), en utilisant quels protocoles RF (204) qui sont applicables à chaque paire de dispositifs (52) en mode d'interrogation et (70, 72, 74) en mode écoute connectés.

4. Procédé selon la revendication 3, dans lequel la machine à états finis (206) d'interface de contrôleur de communication en champ proche enregistre quels dispositifs (70, 72, 74) activés par communication en champ proche en mode écoute sont alloués à quels canaux dynamiques (208) de l'interface (60) de contrôleur de communication en champ proche.

5. Procédé selon l'une quelconque des revendications précédentes, dans lequel la machine à états finis (206) d'interface de contrôleur de communication en champ proche alloue une pluralité de canaux dynamiques (208) à chaque dispositif (70, 72, 74) en mode écoute détecté.

6. Procédé de transmission de données entre un dispositif (52) activé par communication en champ proche en mode d'interrogation et l'un quelconque parmi un ou plusieurs dispositifs (70, 72, 74) activés par communication en champ proche en mode écoute selon l'une quelconque des revendications précédentes, comprenant la consultation de la machine à états finis (206) d'interface de contrôleur de communication en champ proche pour déterminer quel canal dynamique (208) est mappé à quel dispositif (200) en mode écoute ; l'interrogation de la machine RF à états finis (200) pour déterminer quel protocole RF (204) est utilisé par chaque dispositif cible (202) en mode écoute ; la transmission de données (220) depuis le dispositif (52) en mode d'interrogation jusqu'à un dispositif (74) en mode écoute en acheminant les données par l'intermédiaire du canal dynamique (208) déterminé et en utilisant le protocole RF (202) déterminé.

7. Procédé de transmission de données entre un dispositif (74) activé par communication en champ proche en mode écoute et un dispositif (52) activé par communication en champ proche en mode d'interrogation selon l'une quelconque des revendications précédentes, comprenant la consultation de la machine à états finis (206) de communication en champ proche pour déterminer quel canal dynamique (208) est mappé sur ledit dispositif (202) en mode écoute ; l'interrogation de la machine RF à états finis (200) pour déterminer quel protocole RF (204) est utilisé par ledit dispositif (202, 74) en mode écoute ; la transmission de données (220) depuis le dispositif (74) en mode écoute jusqu'au dispositif (52) en mode d'interrogation en acheminant les données par l'intermédiaire du canal dynamique (208) déterminé et en utilisant le protocole RF (204) déterminé.

8. Procédé de transmission de données entre des premier (74) et second (52) dispositifs en mode écoute par l'intermédiaire du contrôleur de communication en champ proche (56) d'un dispositif (52) activé par communication en champ proche en mode d'interrogation agissant comme un bus de données conforme à l'une quelconque des revendications précédentes, comprenant la consultation de la machine à états finis (206) d'interface de contrôleur de communication en champ proche pour déterminer quel canal dynamique (208) est mappé sur lesdits dispositifs (202, 74, 72) en mode écoute ; l'interrogation de la machine RF à états finis (200) pour déterminer quels protocoles RF (204) sont utilisés par lesdits dispositifs (202, 74, 72) en mode écoute ; la transmission de données (222) depuis un premier des dispositifs (74) en mode écoute jusqu'à un second des dispositifs (72) en mode écoute en acheminant les données par l'intermédiaire des canaux dynamiques (208) déterminés et en utilisant les protocoles RF (204) déterminés.

9. Dispositif (52) activé par communication en champ proche en mode d'interrogation comprenant une interface de communication en champ proche (56), l'interface de communication en champ proche (56) comprenant :
une pluralité de canaux logiques dynamiques (208), chaque canal logique dynamique (208) pouvant être assigné individuellement, en service, à un second dispositif (70, 72, 74) activé par communication en champ proche en mode écoute, détecté à l'intérieur d'un champ RF (14) du dispositif (52) activé par communication en champ proche en mode d'interrogation,
une machine RF à états finis (200) spécifique au dispositif pour chaque second dispositif en mode écoute identifié qui contient, pour chaque second dispositif (70, 72, 74) en mode écoute identifié, l'état de connexion de chaque second dispositif (70, 72, 74) activé par communication NFC de l'état de sommeil (113) à l'état « activé » (114, 116, 118) obtenu par le premier dispositif (52) activé par communication NFC, envoyant un ordre « RF discover select » (« sélectionner recherche RF ») (102, 104, 106) pour chaque second dispositif (70, 72, 74) activé par communication NFC qui active (111) chaque second dispositif (70, 72, 74) activé par communication NFC à la réception d'un signal de réponse (108, 110, 112),
ainsi qu'une machine à états finis (206) d'interface de contrôleur de communication en champ proche spécifique au dispositif pour chaque second dispositif en mode écoute identifié, laquelle contient une table qui mappe chacun des seconds dispositifs (70, 72, 74) activés par communication en champ proche dans la plage, détecté, à un canal logique dynamique séparé,
dans lequel, dans chaque canal logique dynamique, une connexion (220, 222, 224) est établie et maintenue entre le dispositif (52) en mode d'interrogation et chacun des seconds dispositifs (70, 72, 74) en mode écoute,
le dispositif (52) étant configuré pour transmettre et acheminer des données directement depuis un, premier, second dispositif (74) activé par communication en champ proche en mode écoute jusqu'à un autre second dispositif (72) activé par communication en champ proche en mode écoute en mappant la transmission de données (220) en utilisant les multiples connexions ouvertes et les mappages de canaux dynamiques contenus dans la machine à états finis (206) d'interface de communication de contrôleur en champ proche et dans la machine RF à états finis (200).

10. Dispositif (52) en mode d'interrogation selon la revendication 9, dans lequel la machine à états finis (206) d'interface de contrôleur de communication en champ proche comprend deux états d'interface de contrôleur de communication en champ proche en mode d'interrogation.

11. Dispositif (52) en mode d'interrogation selon la revendication 9 ou la revendication 10, comprenant en outre un quelconque ou plusieurs dispositifs dans le groupe comprenant : un émetteur récepteur RF, une mémoire, une alimentation et une antenne cadre à induction RF.

12. Dispositif (52) en lecture et/ou en écriture selon l'une quelconque des revendications 9 à 11.

13. Déclencheur de poste à poste (52) selon l'une quelconque des revendications 9 à 12.
